Europäisches Patentamt

European Patent Office

Office européen des brevets

(11) Publication number: 0 290 946
A1

## EUROPEAN PATENT APPLICATION

(21) Application number: 88107169.0

(22) Date of filing: 04.05.88

(51) Int. Cl.⁴ F16C 11/04 , F16B 5/02

(30) Priority: 07.05.87 IT 2153987 U

(43) Date of publication of application:
17.11.88 Bulletin 88/46

(84) Designated Contracting States:
AT BE CH DE ES FR GB GR LI LU NL SE

(71) Applicant: FIMTESSILE FABBRICA ITALIANA
MACCHINARIO TESSILE S.p.A.
Via Spiazzi, 52
I-24028 Ponte Nossa (Bergamo)(IT)

(72) Inventor: Riccardi, Mario
Via Duca D'Aosta, 26
I-24020 Parre Bergamo(IT)

(74) Representative: Vatti, Paolo, Dr. Ing. et al
Fumero - Studio Consulenza Brevetti
Widenmayerstrasse 4/I
D-8000 München 22(DE)

(54) Mechanical articulation element, especially for components of textile machines.

(57) Mechanical articulation element, especially for members and components of textile machines, of the type comprising two strips (1, 2) emerging from a body of the element, a journal (3) interposed between the strips and a connection screw (4), and wherein the journal is fixed to a first of said strips and connected, with possibility of removal, to the second strip by means of the screw. In this articulation element, said journal is formed by a pair of coaxial bushes (7, 8), an internal one (8) and an external one (7), and is fixed to said first strip by riveting of the internal bush (8) on the external one (7).

FIG. 1

# MECHANICAL ARTICULATION ELEMENT, ESPECIALLY FOR COMPONENTS OF TEXTILE MACHINES

The present invention concerns a mechanical articulation element, particularly designed for application to members and components of textile machines, even if apt to be used in different other mechanical fields.

As known, in a great number of mechanical applications it is necessary to provide, between two parallel strip irons, for a journal meant to form the axis of an articulation. In such cases, a cylindrical journal is normally used, the length of which slightly exceeds the wanted gauge and the ends of which are machined in a lathe to take up a smaller diameter, so as to be introduced into holes made in the opposed support strips which form the articulation. The portion of each journal projecting beyond the outer wall is squashed, so as to obtain a fixing by riveting of the journal to both strips.

This system has some inconveniences: the riveting operation actually produces a marked deformation of the journal and, in order to cause the free oscillation of the riveted piece, it is necessary to increase the diameter of the hole, in that a more precise size would create inconveniences; on the other hand, the disassembly of the piece thus obtained involves a difficult operation and makes it impossible to use again some parts of the articulation which undergo damage during disassembly.

To overcome these drawbacks, the Applicant had already conceived (FR-A-2 435 627) an articulation element comprising two strips emerging from a body of the element, a journal interposed between the strips and a connection screw, wherein the journal was stably fixed to a first of said strips and connected, with possibility of removal, to the second strip by means of the screw.

In said articulation element, the fixing of the journal to the first strip required however a difficult riveting operation, which the present invention intends to avoid, so as to facilitate construction of the articulation element and make it more practical, reliable and economic.

For this purpose, the invention concerns an articulation element of the aforespecified type, characterized in that said journal is formed by a pair of coaxial bushes, an internal one and an external one, and is fixed to said first strip by riveting of the internal bush on the external one, thereby achieving the great advantage of a practical, simple and easy assembly, without forgoing efficiency.

In the aforespecified articulation element, said strips suitably comprise holes corresponding to the journal axis, having frustoconical rims into which fits, on one side, the inner wall of said external bush, said internal bush fitting into the other side of the frustoconical hole of the first strip and comprising a projecting edge, which is riveted on the external bush for fixing the journal formed by the two bushes to the first strip.

Moreover, in said articulation element, the engagement between the second strip and the journal is conveniently obtained by way of the frustoconical rim of the hole of said strip, through which said screw passes, bearing thereon with its head, to be screwed into a threaded hole of the internal bush of the journal.

The invention is illustrated in further detail - by way of example - in the following description, given with reference to the accompanying drawing, in which:

Fig. 1 is a side view of the element in a fully assembled position;

Fig. 2 shows the same element - again seen from the side - in a partially disassembled position; while

Figs. 3 and 4 show two intermediate steps of the assembly of the journal of said element.

With reference to the drawing, the articulation element according to the invention comprises a pair of strips 1 and 2 emerging from a body C of the element, a bored cylindrical journal 3 and a screw 4.

The strips 1 and 2 have opposed holes 1' and 2', the peripheries of which are inwardly bent, forming beveled frustoconical rims 5 and 6.

According to the invention, the journal 3 is formed by a pair of external and internal bushes 7 and 8. The external bush 7 has the outer wall cylindrical and the inner wall with a double profiling, so as to externally fit into the frustoconical rims 5 and 6 of the holes 1' and 2' of the strips 1 and 2. The internal bush 8 has the inner wall cylindrical and the outer wall partly cylindrical and partly profiled, so as to internally fit into the frustoconical rim 5 of the hole 1' of the strip 1.

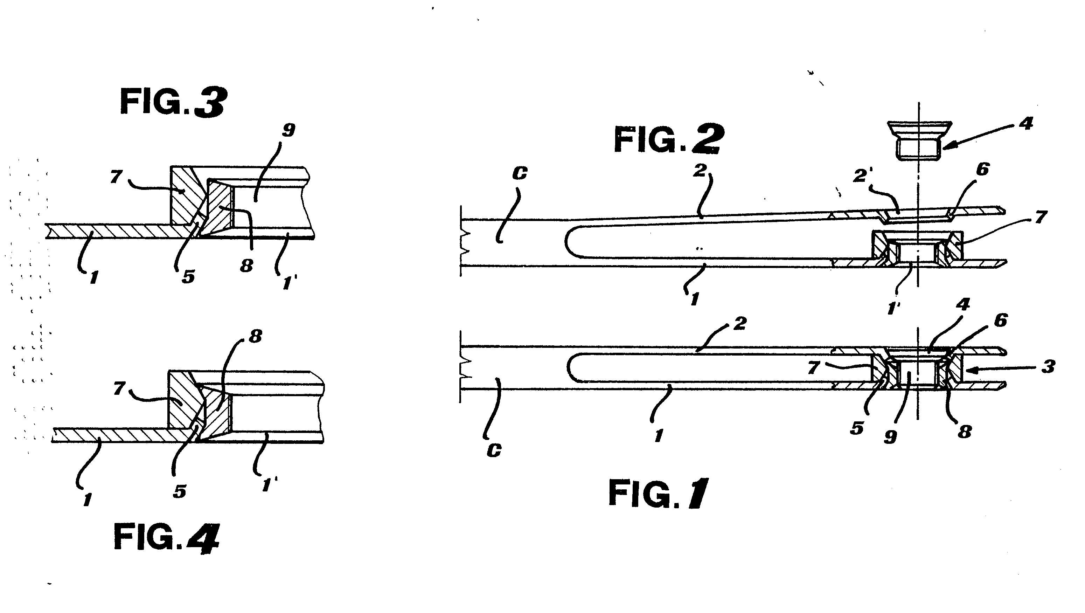

With this configuration, the assembly of the journal is obtained in the most simple way, by associating from the inside the external bush 7 and from the outside the internal bush 8 to the strip 1, in correspondence of the hole 1', as shown in figure 3. Once the three components are positioned as in figure 3, the mere riveting of the slightly flared free end of the cylindrical part of the bush 8 onto the outermost inclined portion of the inner wall of the bush 7 (see figure 4) makes said components mutually integral, thereby forming the journal 3 and obtaining at the same time its stable fixing to the strip 1.

The journal 3, formed by the bushes 7 and 8, is crossed by a cylindrical hole 9, which is threaded in correspondence of the inner wall of the bush 8 and which comprises, near the strip 2, a flaring formed by part of the inner wall of the bush 7, into which bears the conical periphery 6 of the hole 2' of the strip 2. The engagement between the strip 2 and the journal 3 is guaranteed by the screw 4, apt to be screwed into the threaded hole 9 and the suitably countersunk head of which mates with the frustoconical periphery of the hole 2'. The screw 4 can be screwed and unscrewed when required, by acting on its head with a spanner for assembly and removal of the articulation. Said assembly and removal are allowed - in a manner known per se - by the elasticity of the strips 1 and 2 of the body C.

## Claims

1) Mechanical articulation element, especially for members and components of textile machines, of the type comprising two strips emerging from a body of the element, a journal interposed between the strips and a connection screw, and wherein the journal is fixed to a first of said strips and connected, with possibility of removal, to the second strip by means of the screw, characterized in that said journal is formed by a pair of coaxial bushes, an internal one and an external one, and is fixed to said first strip by riveting of the internal bush on the external one.

2) Articulation element as in claim 1), wherein said strips comprise holes corresponding to the journal axis, having frustoconical rims into which fits, on one side, the inner wall of said external bush, said internal bush fitting into the other side of the frustoconical hole of the first strip and comprising a projecting edge, which is riveted on the external bush for fixing the journal formed by the two bushes to the first strip.

3) Articulation element as in claims 1) and 2), wherein the engagement between the second strip and the journal is obtained by way of the frustoconical rim of the hole of said strip, through which said screw passes, bearing thereon with its head, to be screwed into a threaded hole of the internal bush of the journal.

FIG. 2

FIG. 1

FIG. 3

FIG. 4

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | FR-A-2 435 627 (FIMTESSILE FABBRICA ITALIANA MACCHINARI TESSILI S.p.A.) * Whole document * & IT-A-22 280 | 1,3 | F 16 C 11/04 F 16 B 5/02 |
| A | FR-A-2 240 655 (SOC. ANONYME DES ETABLISSEMENTS STAUBLI) * Claim 1; figures * | 1,3 | |
| A | US-A-3 907 154 (JESEVICH et al.) * Column 2, lines 30-65; figures * | 1,2 | |
| A | DE-B-1 185 866 (VAILLANT) | | |

TECHNICAL FIELDS SEARCHED (Int. Cl.4)

F 16 C
F 16 B
F 16 L
B 21 D

The present search report has been drawn up for all claims

| Place of search | Date of completion of the search | Examiner |
|---|---|---|
| THE HAGUE | 13-07-1988 | BORRELLI R.M.G.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)